# EUROPÄISCHE PATENTSCHRIFT

(11) **EP 3 503 987 B1**
(45) Veröffentlichungstag und Bekanntmachung des Hinweises auf die Patenterteilung: **16.03.2022**
(21) Anmeldenummer: 17761455.9
(22) Anmeldetag: 22.08.2017
(51) Int. Cl.: F04B 53/22, B01D 39/20, F04B 43/02, F04B 43/06

(54) **MEMBRANPUMPE ZUR FLUIDISIERUNG UND FÖRDERUNG VON STÄUBEN MIT EIMEM GASDURCHLÄSSIGEN KÖRPER**
DIAPHRAGM PUMP FOR FLUIDIZING AND PUMPING DUST WITH A GAS-PERMEABLE BODY
POMPE À DIAPHRAGME POUR FLUIDISER ET POMPER LA POUSSIÈRE AVEC UN CORPS PERMÉABLE AU GAZ

(30) Priorität: 25.08.2016 DE 102016216016
(43) Veröffentlichungstag der Anmeldung: 03.07.2019
(73) Patentinhaber: Dipl. Ing. Ernst Schmitz GmbH & Co. KG Maschinen und Apparatebau, 47918 Tönisvorst (DE)
(72) Erfinder: HANNEMANN, Frank, 91341 Röttenbach (DE); RAHM, Sebastian, 01159 Dresden (DE); WEDER, Marcus, 01728 Bannewitz OT Hänichen (DE)
(74) Vertreter: Patentanwaltskanzlei Vièl & Wieske PartGmbB
(86) Internationale Anmeldenummer: PCT/EP2017/071073
(87) Internationale Veröffentlichungsnummer: WO 2018/036984

(56) Entgegenhaltungen:
- EP-A1- 0 308 541
- EP-A1- 0 308 541
- EP-A2- 0 307 069
- EP-A2- 0 307 069
- DE-A1-102011 007 066
- DE-A1-102011 007 066
- JP-A- 2015 183 531
- JP-A- 2015 183 531
- US-A- 3 138 856
- US-A1- 2011 155 662

## Beschreibung

Die Erfindung betrifft eine Membranpumpe zur Fluidisierung und Förderung von Stäuben mit einem gasdurchlässigen Körper.

Der gasdurchlässige Körper wird als Auflockerungsfläche in der Membranpumpe zur Fluidisierung und Bespannung von staubförmigen Produkten, wie zum Beispiel Kohlenstaub, mit Hilfe von Inertgas mit Drücken bis 7 MPa als Filterelement eingesetzt.

Eine kontinuierliche und kostengünstige Dichtstromförderung bei wechselnder Staubqualität von Brennstäuben für Kohle- und Biomassevergasungsanlagen erlangt eine zunehmende Bedeutung, um zum Beispiel Vergasungsanlagen wirtschaftlicher und mit hoher Verfügbarkeit zu betreiben. Diese Zielstellung wird in besonderer Weise unter Einsatz einer Membranpumpe, wie in der Patentanmeldung DE102016201182 vom 27. 01. 2016 vorgeschlagen, erreicht. Das staubförmige Fördergut wird hierbei von unten in die Membranpumpe angesaugt, in einem nächsten Schritt bespannt und fluidisiert und nachfolgend unter Druck ausgefördert. Das Restgasvolumen im Staubraum der Membranpumpe wird nach dem Ausfördern des Fördergutes in einem letzten Schritt entspannt und der Pumpenzyklus beginnt von vorne. Aufgrund dieser zyklischen (diskontinuierlichen) Arbeitsweise werden üblicherweise mehrere Pumpenköpfe zusammengeschaltet, um einen kontinuierlichen Betrieb zu gewährleisten. Hierfür werden die einzelnen Pumpenzyklen gegeneinander phasenverschoben betrieben. Filtermaterialien, die den Anforderungen an Druckfestigkeit und Temperaturbeständigkeit genügen, sind zum Beispiel die in DE102012216084 beschrieben metallischen Filtrationsgewebe, Sintermetall und Sinterkunststoff. Die beschriebenen robusten Materialien sind nur in flacher oder plattenartiger Struktur und nicht in der erforderlichen Größe beziehungsweise Abmessung verfügbar. Eine mechanische Bearbeitung in andere geometrische Formen, wie zum Beispiel Halbschalen, ist aufgrund der geforderten Filterfeinheit und der bei mechanischer Bearbeitung entstehenden Schädigungen beziehungsweise Verschmierungen der porösen Filterstruktur nicht möglich.

DE 10 2011 007066 A1 offenbart eine Membranpumpe zur pneumatischen Druckförderung von Stäuben bei der ein Schleusenbehälter gegeben ist, das Volumen in dem Schleusenbehälter durch eine Membran in einen Staubbereich und einen Beaufschlagungsmittelbereich gas- und flüssigkeitsdicht getrennt ist, wobei ein Filterelement in seiner Form angepasst an das von der Auslenkung der Membran ausgesparte Volumen ist und im Wesentlichen eine Ringform aufweist.

Aus dem Sonderdruck aus "Industriepumpen + Kompressoren", 16. Jahrgang, Heft 3 - 2010, Seiten 120-123, Vulkan-Verlag Essen mit dem Titel: "Prozesspumpen mit zustandsüberwachter redundanter Schlauchmembran-Einspannung" von Heinz M. Nägel ist eine Prozesspumpe bekannt, deren Doppelmembran auf Unversehrtheit überwacht wird mittels Koppelungsflüssigkeit und Anschluss an eine Membranbruchanzeige.

Der Erfindung liegt die Aufgabe zugrunde, eine in der DE 10 2005 047 583 A1 beschriebene Dichtstromförderung durch Erzeugung einer Wirbelschicht innerhalb des Staubraumes zu erzeugen.

Die Aufgabe wird durch eine Membranpumpe zur Fluidisierung und Förderung von Stäuben mit den Merkmalen des Anspruchs 1 gelöst.

Die Erfindung macht sich die Erkenntnis zu Nutze, dass für die Arbeitsweise der Membranpumpe eine gleichmäßig verteilte Zuführung des Wirbelgases im unteren Bereich der Staubpumpe wesentlich ist. Bei dem erfindungsgemäß hergestellten Auflockerungselement ist sichergestellt, dass durch eine Bearbeitung zu einem gewölbten Filterelement mit einer 3-dimensionalen Formgebung etwaige Verschmierungen des Materials vermieden werden und eine gleichmäßige Porosität realisierbar ist.

Das benutzte Auflockerungselement weist eine konstante Porosität auf, wodurch sichergestellt werden kann, dass feinste Staubpartikel während des Entspannungsvorganges des Staubraumes nicht in die Auflockerungsfläche eindringen, was während des Bespannungsvorganges eine gleichmäßig verteilte Zuführung von Wirbelgas in den Staubraum bewirkt.

Die Erfindung gestattet eine konstruktive Gestaltung des Staubraumes, dessen Kontur besonders vorteilhaft an die Auslenkung der Membran und gegebenenfalls an die Führungsstange der Membran angepasst ist. Hierdurch wird eine gleichmäßige und reversible Verformung der Membran mit einem nach Möglichkeit geringem Verschleiß erreicht.

Nach Abschluss des Ausfördervorganges der Membranpumpe kann ein weitgehend flächiges Anliegen der Membran (3) auf die halbschalenförmige Auflockerungsfläche (5) erreicht werden. Durch diese vorteilhafte Ausgestaltung ist ein geringes Totvolumen erreichbar, was zu minimalem Staubraumvolumen (10) bei gleichzeitig hoher Fördermenge und einem geringen Hochdruckgasverlust führt.

Bei einer hydraulisch angetriebenen Membranpumpe zur pneumatischen Hochdruckförderung von fluidisierten Stäuben, die mit dem erfindungsgemäß hergestellten Filterelement ausgestattet ist, weist der den Staubraum umschließende Druckbehälter geringe Abmessungen mit einer minimierten Wandstärke auf, was zu einer Verringerung des Herstellungsaufwandes führt.

In einer besonderen Ausführung der Erfindung besitzt die Auflockerungsfläche 5 am tiefsten Punkt eine kreisförmige Öffnung, an der ein Staubrohr 7 befestigt ist, durch welches das staubförmige Fördergut eingefördert und ausgefördert werden kann und somit nicht in den Gasraum 13 gelangen kann. Vorteilhafte Weiterbildungen der Erfindung sind in den Unteransprüchen angegeben.

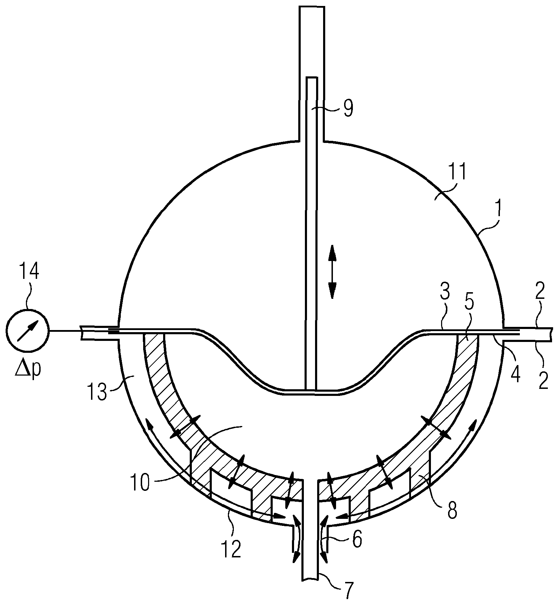

Die Erfindung wird im Folgenden als Ausführungsbeispiel in einem zum Verständnis erforderlichen Umfang anhand der Figur 1 näher erläutert.

Die in Figur 1 dargestellte Membranpumpe ist eine aus zwei druckfesten Halbschalen (1, 12) bestehende Vorrichtung, die über eine Flanschverbindung (2) gasdicht miteinander verbunden sind. Die Flanschverbindung hat neben einer einfachen Demontagemöglichkeit der Staubpumpe die zusätzliche Funktion, die Membran (3) und die Auflockerungsfläche (5) über einen Filterflansch (4) zu befestigen und einzuspannen. Durch die kugelförmige Geometrie kann somit eine vorteilhafte und für das Filtermaterial schonende Auslenkung der Membran in den Staubraum in Form eines Rotationsparaboloids erfolgen. Die Auslenkung der Membran wird dabei durch eine Krafteinwirkung der Hydraulikflüssigkeit, wie zum Beispiel in DE102016201182 beschrieben, hervorgerufen. Sprungartige Änderungen werden vermieden und nach Abschluss des Ausfördervorganges kann ein weitgehend flächiges Anliegen der Membran (3) auf die halbschalenförmige Auflockerungsfläche (5) erreicht werden. Durch diese vorteilhafte Ausgestaltung ist ein geringes Totvolumen erreichbar, was zu minimalem Staubraumvolumen (10) bei gleichzeitig hoher Fördermenge und einem geringen Hochdruckgasverlust führt. Um unerwünschte Bewegungen und Faltungen während des Ausfördervorganges zu vermeiden, wird die Membran über eine Führungsstange (9) in ihrer Bewegung geführt und stabilisiert. Die Führungsstange kann in besonders vorteilhafter Ausführung zusätzliche Aufgaben, wie zum Beispiel die einer Positionsbestimmung der Membran über messtechnische Stellungsgeber übernehmen.

Der Erfindung liegt weiterhin das Problem zugrunde, eine in DE 10 2005 047 583 A1 beschriebene Dichtstromförderung durch Erzeugung einer Wirbelschicht innerhalb des Staubraumes zu erzeugen. Hierfür sorgt während des Bespannungs- und Ausfördervorganges eine homogene Gaszuführung über eine halbschalenförmige und gasdurchlässig ausgeführte Auflockerungsfläche (5). Als Filtermaterial für die Auflockerungsfläche (5) wird poröses Metall, zum Beispiel Aluminium, mit einer ausreichend kleinen Porengröße und Filterfeinheit <20 µm verwendet. Damit kann sichergestellt werden, dass feinste Staubpartikel während des Entspannungsvorganges nicht in die Auflockerungsfläche eindringen.

Für die Herstellung von porösem Metall wird flüssiges Metall, zum Beispiel Aluminium, zusammen mit granuliertem Salz in eine Halbschalenform gegossen. Salz besitzt zum Beispiel gegenüber Metallen wie Aluminium einen wesentlich höheren Schmelzpunkt und geht nicht in den flüssigen Aggregatzustand über, sondern verteilt sich gleichmäßig in der Schmelze. Nach Erstarrung des Metalls wird das Salz mit Hilfe einer salzlösenden Flüssigkeit ausgewaschen und poröses und gasdurchlässiges Metall entsteht. Ein Vorteil dieses Verfahrens besteht in der Möglichkeit, eine mechanische Bearbeitung vor Auswaschung der Salzkristalle durchzuführen. Dadurch ist ein Verschmieren der Poren ausgeschlossen. Die erforderliche Porosität und Filterfeinheit wird über die Größe der Salzkörner eingestellt.

Um eine vorteilhafte Flanschabdichtung (2) zu erreichen, kann die Auflockerungsfläche (5) in zwei Schichten ausgeführt werden, im unteren Bereich als poröses Metall und im Flanschbereich aus Vollmaterial.

In einer besonderen Ausgestaltung der Erfindung wird die halbschalenförmige Gussform der Auflockerungsfläche (5) mit zusätzlichen ringförmigen und/oder punktförmigen Abstützelementen (8) erweitert. Damit kann die halbschalenförmige und aus porösem Metall bestehende Auflockerungsfläche (5) in die untere druckfeste und aus Vollmaterial bestehende Halbschale (12) eingepasst und befestigt werden. Zwischen der aus porösem Metall bestehenden Auflockerungsfläche und der druckfesten Halbschale entsteht in vorteilhafter Weise ein Gasraum 13, der für die Verteilung des Auflockerungs- und Bespannungsgases verwendet werden kann. Die Zu- und Abführung des Auflockerungs- und Bespannungsgases erfolgt über Öffnungen 6 in der unteren druckfesten Halbschale 12.

Bei einer hydraulisch angetriebenen Membranpumpe zur pneumatischen Hochdruckförderung von fluidisierten Stäuben kommt der sicheren Abdichtung des Staubraumes vom Hydraulikraum, welche durch die Membran getrennt sind, besondere Bedeutung zu. Die Auslenkung der Membran und das damit verbundene Ansaugen und Ausfördern des staubförmigen Fördergutes wird durch das Eindrücken und Ausdrücken der Hydraulikflüssigkeit in dem oberhalb der Membran befindlichen Hydraulikraum erreicht. Innerhalb dieses Fördervorganges ist das Eindringen von Staub in die Hydraulikflüssigkeit oder von Hydraulikflüssigkeit in den Staubraum mit erheblichen Anlagenstörungen verbunden und würde zu aufwändigen Reparaturen führen.

Eine Besonderheit der Erfindung besteht in der Überwachung und Sicherstellung der Membrandichtigkeit. Hierzu wird die Membran (3) als Doppelmembran mit integriertem Drucksensor zur Leckageüberwachung ausgeführt. Damit kann eine hermetisch dichte Trennung zwischen Hydraulikraum (11) und Staubraum (10) sichergestellt und Schäden an der Membran rechtzeitig erkannt werden. Aufwändige Reparatur- und Reinigungsmaßnahmen des gesamten Staubsystems oder Hydrauliksystems werden bei Membranschäden verhindert und die Dichtheit der Membran während des Störfalles aufrechterhalten.

Bei einer Ausführung der Membran 3 als Doppelmembran sind zwei gummielastische Membranen derart gegeneinander mechanisch abgestützt angeordnet, dass zwischen den Membranen ein geschlossener Zwischenraum gebildet ist, der mittels eines Drucksensors Δp (14) überwachbar ist. Im störungsfreien Betrieb weist der Zwischenraum einen Druck auf, der niedriger ist als der Druck im Hydraulikraum oder dem Staubraum. Wird nun ein Druckanstieg in dem Zwischenraum festgestellt, wird auf eine Leckage einer der beiden Membranen der Doppelmembran geschlossen. Die beiden Membranen können dadurch punktuell gegeneinander mechanisch abgestützt angeordnet sein, dass zwischen ihnen eine Lage Kugeln angeordnet sind. Die beiden Membranen können dadurch gegeneinander mechanisch abgestützt angeordnet sein, dass zwischen ihnen eine Koppelungsflüssigkeit eingebracht ist, die mit dem Drucksensor Δp in Wirkverbindung steht.

Die gummielastische Membran kann mit einem Elastomer oder einer massiven PTFE-Mischung gebildet sein. Bei der Doppelmembran kann eine der beiden Membranen durch ein Elastomer und die andere der beiden Membranen durch eine massive PTFE-Mischung gegeben sein.

Die vorliegende Erfindung wurde zu Illustrationszwecken anhand von konkreten Ausführungsbeispielen im Detail erläutert. Dabei können Elemente der einzelnen Ausführungsbeispiele auch miteinander kombiniert werden. Die Erfindung soll daher nicht auf einzelne Ausführungsbeispiele beschränkt sein, sondern lediglich eine Beschränkung durch die angehängten Ansprüche erfahren.

### Bezugszeichenliste

- 1.: Druckfeste obere Halbschale, Hydraulikhalbschale
- 2.: Behälterflansch
- 3.: Membran
- 4.: Filterflansch
- 5.: Auflockerungsfläche bestehend aus porösem metallischen Filtermaterial
- 6.: Öffnungen für Bespannungs- und Fördergas, Gasrohr
- 7.: Innenrohr für Ein- und Austritt des Staubes, Staubrohr
- 8.: Ringförmige, punktförmige, streifenförmige Abstützelemente
- 9.: Membranführung / Führungsstange
- 10.: Staubraum
- 11.: Hydraulikraum
- 12.: Druckfeste untere Halbschale, Staubhalbschale
- 13.: Gasraum
- 14.: Drucksensor Δp

## Patentansprüche

1. Membranpumpe zur Fluidisierung und Förderung von Stäuben,
wobei das druckfeste Gehäuse der Membranpumpe aus zwei Halbschalen (1,12) besteht, die mit einer Flanschverbindung (4) verbunden und in die eine Membran (3) und eine Auflockerungsfläche (5) zur Zuführung von Wirbel- oder Bespannungsgas in das Druckgefäß der Membranpumpe eingeflanscht sind,
wobei eine homogene Gasführung über eine halbschalenförmige und gasdurchlässig ausgeführte Auflockerungsfläche (5) vorgesehen ist, und
wobei als Filtermaterial für die Auflockerungsfläche (5) poröses Metall mit einer ausreichend kleinen Porengröße und Filterfeinheit <20 µm verwendet wird und wobei die Membran (3) über eine Führungsstange (9) in ihrer Bewegung geführt und stabilisiert wird.

2. Membranpumpe gemäß Anspruch 1, **dadurch gekennzeichnet, dass** am tiefsten Punkt der Auflockerungsfläche (5) eine Öffnung vorgesehen ist, an der ein Staubrohr (7) angeordnet ist.

3. Membranpumpe gemäß einem der Ansprüche 1 bis 2, **dadurch gekennzeichnet, dass** ringförmige und/oder punktförmige Abstützelemente (8) an die Auflockerungsfläche (5) angeformt sind, wobei die Auflockerungsfläche in die untere Halbschale (12) eingepasst und befestigt wird.

## Claims

1. Diaphragm pump for fluidising and conveying of dusts, wherein the pressure-resistant housing of the diaphragm pump consists of two half-shells (1, 12) which are connected by a flange connection (4) and into which a diaphragm (3) and a loosening surface (5) for supplying swirling or pressurising gas into the pressure vessel of the diaphragm pump are flanged, wherein a homogeneous gas conduction is provided via a half-shell-shaped and gas-permeable loosening surface (5), and wherein porous metal with a sufficiently small pore size and filter fineness <20 µm is used as filter material for the loosening surface (5) and wherein the movement of the diaphragm (3) is guided and stabilised via a guide rod (9).

2. Diaphragm pump according to claim 1, **characterised in that** at the lowest point of the loosening surface (5) an opening is provided at which a dust tube (7) is arranged.

3. Diaphragm pump according to one of the claims 1 to 2, **characterised in that** annular and/or point-shaped support elements (8) are moulded onto the loosening surface (5), the loosening surface being fitted and fastened into the lower half-shell (12).

## Revendications

1. Pompe à membrane pour la fluidisation et le transport de poussières, le boîtier résistant à la pression de la pompe à membrane étant constitué de deux demicoques (1, 12) qui sont reliées par un assemblage à bride (4) et dans lesquelles sont bridées une membrane (3) et une surface de désagrégation (5) pour l'amenée de gaz de fluidisation ou de tension dans le récipient sous pression de la pompe à membrane, un guidage homogène du gaz étant prévu par l'intermédiaire d'une surface de désagrégation (5) en forme de demi-coquille et perméable au gaz, et dans lequel on utilise comme matériau filtrant pour la surface de désagrégation (5) un métal poreux avec une taille de pores suffisamment petite et une finesse de filtre <20 µm et dans lequel la membrane (3) est guidée et stabilisée dans son mouvement par une tige de guidage (9).

2. Pompe à membrane selon la revendication 1, **caractérisée en ce qu'**au point le plus bas de la surface de désagrégation (5) une ouverture est prévue sur laquelle est disposé un tube à poussières (7).

3. Pompe à membrane selon l'une des revendications 1 à 2, **caractérisée en ce que** des éléments de support annulaires et/ou ponctuels (8) sont formés sur la surface de désagrégation (5), la surface de désagrégation étant ajustée et fixée dans la demicoque inférieure (12).
